**Europäisches Patentamt**

**European Patent Office**

**Office européen des brevets**

(19)

(11) Numéro de publication: **0 216 664**
**B1**

(12) **FASCICULE DE BREVET EUROPEEN**

(45) Date de publication du fascicule du brevet:
**18.07.90**

(51) Int. Cl.⁵: **C01B 17/45,** C01G 43/06,
B01J 19/12

(21) Numéro de dépôt: **86401829.6**

(22) Date de dépôt: **18.08.86**

(54) **Procédé de préparation de décafluorure de soufre et d'hexafluorure de soufre.**

(30) Priorité: **22.08.85 FR 8512623**

(43) Date de publication de la demande:
**01.04.87 Bulletin 87/14**

(45) Mention de la délivrance du brevet:
**18.07.90 Bulletin 90/29**

(84) Etats contractants désignés:
**DE GB IT NL**

(56) Documents cités:
**FR-A- 2 248 076**
**GB-A- 1 496 125**

**ANGEWANDTE CHEMIE,**
**vol. 92, no. 3, mars 1980, pages 226,227, Verlag Chemie GmbH, Weinheim, DE; F.S. BECKER et al.: "Direkte Photolyse von Uranhexafluorid als präparativ nutzbare endotherme Reaktion"**

(73) Titulaire: **COMMISSARIAT A L'ENERGIE ATOMIQUE, 31/33, rue de la Fédération, F-75015 Paris(FR)**

(72) Inventeur: **Folcher, Gérard, 40, rue de Persepolis, F-91400 Orsay(FR)**
Inventeur: **Lambard, Jacques, 72, rue de Chalais, F-94240 L'Hay-les-Roses(FR)**

(74) Mandataire: **Mongrédien, André et al, c/o BREVATOME 25, rue de Ponthieu, F-75008 Paris(FR)**

ACTORUM AG

## Description

La présente invention a pour objet un procédé de préparation de fluorures de soufre de formule $SF_6$ et $S_2F_{10}$, ainsi que de pentafluorure d'uranium $UF_5$.

Parmi ces fluorures de soufre, l'hexafluorure de soufre est un composé très demandé dans l'industrie électronique et électrotechnique à cause de ses propriétés diélectriques. Il est en effet largement utilisé comme milieu isolant dans les machines électrostatiques.

L'hexafluorure de soufre a été découvert par H. MOISSAN et S. LEBEAU en 1900 et on le prépare généralement par combustion du soufre dans le fluor gazeux. On peut toutefois obtenir l'hexafluorure de soufre par d'autres procédés, en particulier à partir du tétrafluorure de soufre par réaction de celui-ci avec un agent fluorant tel que l'hexafluorure d'uranium. Ce mode de préparation de l'hexafluorure de soufre peut être intéressant à exploiter commercialement car l'hexafluorure d'uranium appauvri en [235]U provenant des installations de séparation isotopique est une source bon marché d'atomes de fluor.

Dans le brevet francais FR-A-1 586 833, on a utilisé l'hexafluorure d'uranium pour former du tétrafluorure de soufre par réaction thermique du soufre avec cet hexafluorure d'uranium à des températures de 130 à 360°C. Cependant, pour transformer ce tétrafluorure de soufre en hexafluorure de soufre en utilisant comme agent fluorant l'hexafluorure d'uranium, il est nécessaire de chauffer à des températures supérieures à 500°C pour avoir une vitesse de réaction appréciable, comme cela est indiqué par C.E. JOHNSON, J. FISCHER et M.J. STEINDLER dans J. Am. Chem. Soc., Vol. 83, p. 1620 (1961).

Or, une réaction thermique à 500°C ou plus entre $SF_4$ et $UF_6$ est difficile à mettre en oeuvre à cause de la grande réactivité des fluorures en présence dans le réacteur, qui risquent de réagir avec les matériaux constitutifs du réacteur. Ainsi, avec l'alumine, le tétrafluorure de soufre est oxydé en fluorure de thionyle et l'hexafluorure d'uranium est décomposé en fluorure d'uranyle qui peut être régénéré par le tétrafluorure de soufre. Avec le nickel à haute température, l'hexafluorure d'uranium est réduit en $UF_4$. Sous ces atmosphères fluorantes, les parois du réacteur se recouvrent par ailleurs d'une couche de fluorure métallique $AlF_3$ ou $NiF_2$. Dans le cas du nickel, cette corrosion peut avoir un effet destructeur. En effet, la résistance de ce métal à la corrosion de l'hexafluorure d'uranium est très bonne jusqu'à 450°C, la pénétration moyenne étant de l'ordre de 0,01 µm/h pour 10000 Pa d'hexafluorure d'uranium. En revanche, avec un nickel de pureté commerciale (99%) réduit à 1000°C, on observe pour des températures plus fortes une corrosion intercristalline très rapide entraînant une dislocation importante des grains et une attaque en profondeur. Ainsi, entre 500 et 700°C, en quelques heures, le métal sous 10000 Pa d'$UF_6$ présente des cavités profondes de quelques 1/10è de mm recouvertes de croûtes épaisses de $NiF_2$. Ce phénomène est maximum vers 650°C, température de début de recristallisation du nickel. L'attaque en masse du métal à cette température est acceptable (corrosion de 1 mm/an) mais les risques de fissuration corrosive au-delà de 500°C prohibent absolument l'emploi du nickel dans cette zone de températures. Au-delà de 800°C, la corrosion se passe en surface au rythme d'environ 2 mm/an. Les alliages de nickel tels que le Monel® présentent les mêmes effets de corrosion intergranulaire. Aussi, le développement d'une réaction thermique entre l'hexafluorure d'uranium et le tétrafluorure de soufre à des températures supérieures à 450-500°C pour lesquelles la cinétique est encore lente, semble difficile à concevoir pour une réalisation industrielle.

On peut toutefois surmonter cet inconvénient et utiliser des températures plus basses, par exemple de l'ordre de 300°C, à condition d'activer par la lumière les molécules d'hexafluorure d'uranium en faisant appel à des sources de lumière qui peuvent être absorbées par l'hexafluorure d'uranium, par exemple à des sources dans le domaine de longueurs d'ondes de 5 à 6 µm. Ceci peut être réalisé en utilisant un laser à CO comme il est décrit dans le brevet anglais GB-A-1 496 125. Malheureusement, l'énergie apportée par une excitation multiphotonique dans les faibles bandes d'absorption de la région 5-6 µm est insuffisante pour réaliser la réaction de dissociation de l'hexafluorure d'uranium en pentafluorure d'uranium et fluor. Par ailleurs, dans le domaine de longueurs d'ondes donné dans ce brevet, on ne dispose pas de sources puissantes et pratiques à mettre en oeuvre.

La présente invention a précisément pour objet un procédé de préparation de fluorures de soufre choisis parmi l'hexafluorure de soufre $SF_6$ et le décafluorure de soufre $S_2F_{10}$, qui pallie les inconvénients des procédés précités.

Le procédé, selon l'invention, de préparation de fluorures de soufre de formule $SF_6$ et $S_2F_{10}$ par réaction de tétrafluorure de soufre avec l'hexafluorure d'uranium, se caractérise en ce que l'on soumet un mélange gazeux contenant l'hexafluorure d'uranium et le tétrafluorure de soufre à une irradiation au moyen de rayonnements ultraviolets ayant une longueur d'onde de 200 à 400 nm, et en ce que l'on sépare du mélange réactionnel les décafluorure et hexafluorure de soufre formés.

Ainsi, selon l'invention, on réalise une réaction photochimique entre le tétrafluorure de soufre et l'hexafluorure d'uranium excité par de la lumière ultraviolette.

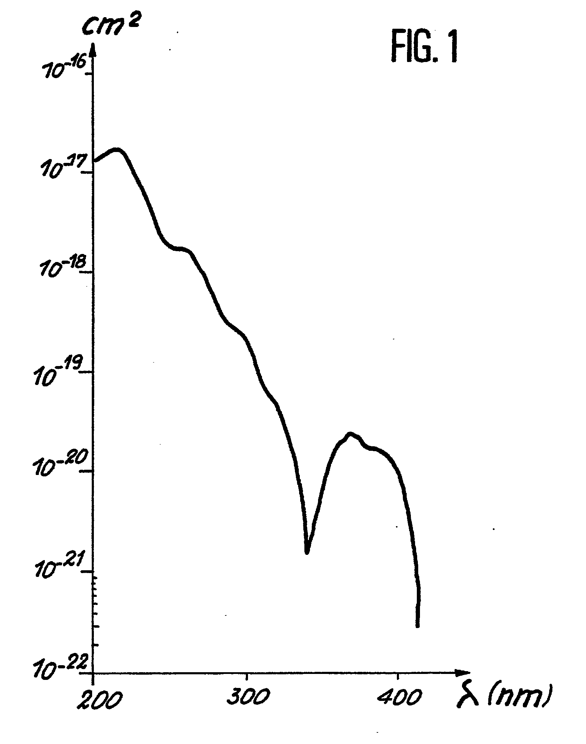

On sait que l'hexafluorure d'uranium $UF_6$ absorbe dans tout l'ultraviolet comme le montre son spectre électronique en phase gazeuse représenté sur la figure 1 qui illustre la section efficace (en cm²) d'absorption ultraviolette de l'hexafluorure d'uranium à 25°C en fonction de la longueur d'onde $\lambda$ (en nm). Dans le domaine de longueurs d'ondes de 200 à 400 nm, il se produit une photodissociation primaire de l'hexafluorure d'uranium par rupture de la liaison U-F selon les schémas réactionnels suivants:

$$UF_{6(g)} + h\gamma \rightarrow UF_{6(g)}^* \qquad (1)$$
$$UF_{6(g)}^* \rightarrow UF_{5(g)}^* + F^* \qquad (2)$$

Dans ces schémas réactionnels $h\gamma$ représente l'énergie des photons, h étant la constante de Planck et $\gamma$ la fréquence du rayonnement utilisé qui est égale à $c/\lambda$ avec c représentant la vitesse de la lumière dans le vide; la notation "*" indique des états excités de toutes sortes, ce qui peut inclure une combinaison d'excitations électronique, vibrationnelle, rotationnelle et translationnelle existant à un degré plus important que dans une distribution thermique à la température ambiante. La lettre g désigne l'état gazeux.

L'énergie de dissociation $F_5U$-$F$ étant de l'ordre de 3 eV, une irradiation dans la région des 250 nm où $UF_6$ présente une forte section efficace comme on peut le voir sur la figure 1, laissera un excédent d'énergie de 2 eV réparti en énergie interne et énergie de translation sur les photoproduits $UF_5^*$ et $F^*$. Etant donné que l'énergie d'activation de la réaction inverse de recombinaison est relativement faible, $UF_{5(g)}^*$ passe à l'état de $UF_5$ gazeux à la faveur d'un choc avec un partenaire quelconque de collision M suivant le schéma réactionnel :

$$UF_{5(g)}^* + M \rightarrow UF_{5(g)} + M \qquad (3)$$

Dans le procédé de l'invention, il est nécessaire de former des radicaux $SF_5$ pour transformer le tétrafluorure de soufre en hexafluorure de soufre. Ceci est obtenu lors de la réduction photochimique de l'hexafluorure d'uranium par la lumière ultraviolette selon la réaction suivante :

$$UF_6 + SF_4 + h\gamma \rightarrow UF_5^* + SF_5^* \qquad (5)$$

Les partenaires réactionnels ainsi obtenus peuvent se combiner selon divers schémas pour former :
- soit du $S_2F_{10}$ par la réaction :

$$SF_5^* + SF_5^* + M \rightarrow S_2F_{10} + M \qquad (6)$$

- soit du $SF_6$ par les réactions :

$$SF_5^* + F^* + M \rightarrow SF_6 + M \qquad (7)$$
$$SF_5^* + UF_6^* + M \rightarrow SF_6 + UF_5 + M \qquad (8)$$
$$SF_5^* + UF_6 \rightarrow SF_6 + UF_5 \qquad (9)$$
$$SF_5^* + F_2 \rightarrow SF_6 + F \qquad (10)$$

Ainsi, on peut réaliser l'oxydation du tétrafluorure de soufre jusqu'à la valence maximale VI sous lumière ultraviolette dans la région spectrale des 200 à 400 nm, au moyen de $UF_6$ qui est réduit à la valence V, selon la réaction globale :

$$2UF_6 + SF_4 + h\gamma \rightarrow 2UF_5 + SF_6 \qquad (11)$$

Ces réactions laissent une phase solide de pentafluorure d'uranium polymérisé facilement séparable de la phase gazeuse contenant le décafluorure de soufre et l'hexafluorure de soufre.

La présente invention a aussi pour objet de préparer un fluorure d'uranium solide comme le pentafluorure d'uranium $UF_5$ par réduction en phase gazeuse de $UF_6$ en présence de $SF_4$.

Il est bien connu que le réduction photochimique de $UF_6$ en présence de lumière ultraviolette conduit à $UF_5$. Le $UF_5$ gazeux obtenu selon la relation (3) présentant une faible tension de vapeur à température ambiante, soit environ $10^{-11}$ Pa, coagule pour donner naissance à du $UF_5$ solide selon le schéma :

$$(UF_5)_n + (UF_5)_g \rightarrow (UF_5)_{n+1}$$

où $(UF_5)_n$ représente un agrégat de n molécules de $UF_5$ avec $n>1$. Quand cette réaction photochimique est réalisée sur le $UF_6$ seul ou en présence d'un gaz neutre qui ne réagit pas avec le fluor atomique $F^*$, ces atomes de fluor se recombinent suivant le réaction :

$$F^* + F^* + M \rightarrow F_2 + M$$

La réaction qui consiste à dissocier le $UF_6$ en présence de lumière ultraviolette permet de produire du $UF_5$ pur mais elle est vite stoppée par la présence du fluor.

Il a été proposé d'introduire des réducteurs comme $H_2$, CO et $SO_2$ pour pallier à cet inconvénient. Cependant ces gaz présentent l'inconvénient d'introduire dans le réacteur des pollutions, dont la plus courante est la vapeur d'eau qui réagit chimiquement avec le $UF_6$ ou le $UF_5$ pour former le fluorure d'uranyle $UO_2F_2$, composé solide qui est recueilli avec le solide $UF_5$. De plus avec l'hydrogène l'acide fluorhydrique produit est chimisorbé sur le solide et est difficile à extraire sans décomposer le $UF_5$. Enfin avec

certains réducteurs comme le CO ou le SO$_2$ les rendements photoniques de synthèse de UF$_5$ sont inférieurs à 1.

La présente invention remédie à ces inconvénients et permet de produire du UF$_5$ stoechiométrique de haute pureté. D'une part le SF$_4$ utilisé est choisi pour être à la fois un réducteur et un gaz fluorant dont l'action sera préférentielle à celle de UF$_6$ vis-à-vis des impuretés qui seront de la sorte transformées en composés gazeux par opposition aux dérivés d'uranium solides. Le mélange réactionnel gazeux en présence de vapeur d'eau conduit au fluorure de thionyle gazeux SOF$_2$ et non au solide UO$_2$F$_2$, qui peut au contraire être régénéré en UF$_6$ à 300° par le réactif SF$_4$.

D'autre part, à cause de sa méthode de synthèse et de purification l'hexafluorure d'uranium sortant des usines de diffusion gazeuse ne comporte pas d'impuretés gazeuses aptes à être transformées par réaction chimique ou photochimique en produits solides dans la réaction photochimique proposée en présence de SF$_4$.

Enfin, les produits de la photoréaction SF$_6$ et S$_2$F$_{10}$ sont des composés de fortes tensions de vapeur, facilement extractables qui n'apportent pas de pollutions soufrées sur les composés de fluorures d'uranium.

Dans ce procédé, l'énergie d'excitation apportée à l'hexafluorure d'uranium pour assurer sa dissociation est d'origine purement électronique et non d'origine vibrationnelle et thermique comme dans le procédé décrit dans le brevet anglais GB-A 1 496 125.

Par ailleurs, le choix d'une gamme de longueurs d'ondes allant de 200 à 400 nm est très intéressant pour une bonne utilisation des photons. En effet, hors UF$_6$, dont c'est le but, les composants gazeux du mélange n'absorbent pas ou absorbent peu la lumière ultraviolette. Le SF$_4$, qui est un des réactifs, présente un maximum d'absorption à 240 nm avec une section efficace de 10$^{-19}$ cm$^2$ soit 20 fois moins forte que celle de l'UF$_6$ à la même fréquence; à 270 nm l'écart est porté à 100 en faveur de l'UF$_6$. Le S$_2$F$_2$ qui peut être présent à côté du SF$_4$ a une section efficace voisine de celle du SF$_4$, et qui reste inférieure à 10$^{-19}$ cm$^2$ entre 220 et 300 nm. Quant au SF$_6$, il est bien connu qu'il ne montre aucune section efficace d'absorption significative U.V. au-dessus de 125 nm, les premières absorptions observables arrivant dans la région des 112-100 nm.

Dans le procédé de l'invention, les quantités relatives de SF$_6$ et S$_2$F$_{10}$ formées par la réaction photochimique dépendent en particulier des concentrations locales respectives de SF$_4$ et UF$_6^*$ représentées dans ce qui suit par [SF$_4$] et [UF$_6^*$].

Quand le rapport [SF$_4$] / [UF$_6^*$] est beaucoup plus grand que 1, le produit de la réaction est essentiellement du S$_2$F$_{10}$. Quand ce rapport diminue, la quantité de SF$_6$ produite croît au détriment de S$_2$F$_{10}$ et le SF$_6$ est prédominant quand le rapport [SF$_4$] / [UF$_6^*$] est plus petit ou égal à 1.

En effet, on peut distinguer deux régimes :

a) - concentration en UF$_6^*$ inférieure à la concentration en SF$_4$.

Dans ce cas, on obtient les réactions suivantes :

$$UF_6^* + SF_4 \rightarrow UF_5 + SF_5^* \qquad (12)$$
$$2SF_5^* \rightarrow S_2F_{10} \qquad (13)$$

dans lesquelles la cinétique de disparition de SF$_4$ est de l'ordre 1 par rapport à UF$_6$.

b) - concentration en UF$_6^*$ plus grande que la concentration en SF$_4$.

Dans ces conditions, on obtient les réactions suivantes :

$$UF_6^* + SF_4 \rightarrow UF_5 + SF_5^* \qquad (14)$$
$$UF_6^* + SF_5^* \rightarrow UF_5 + SF_6 \qquad (15)$$

Dans ce cas, la cinétique de disparition de SF$_4$ est d'ordre 2 par rapport à UF$_6^*$.

Dans le mélange gazeux, la concentration en SF$_4$ est proportionnelle à la pression partielle de SF$_4$ et s'écrit :

$$[SF_4] = \frac{1}{kT} \, P_{SF_4}$$

dans laquelle T est la température absolue et k la constante de Boltzmann.

La concentration en UF$_6^*$ est proportionnelle à la pression partielle de UF$_6$ dans le mélange gazeux et au nombre de photons d'énergie h$\gamma$ délivrés par la source.

Si l'on prend le cas d'une source monochromatique délivrant des photons de longueur d'onde $\lambda = c/\gamma$ dans le mélange gazeux où la concentration en UF$_6$ correspond à :

$$[UF_6] = \frac{1}{kT} \, P_{UF_6}$$

Si l'on appelle $\sigma(\lambda)$ la section efficace d'absorption de l'UF$_6$ à la longueur d'onde $\lambda$, et si l'intensité du faisceau de lumière de longueur d'onde $\lambda$ qui traverse le mélange gazeux sur une longueur $l$ passe de $I_0$ à $I$ quand on introduit l'UF$_6$ sous une concentration [UF$_6$], la fraction de lumière absorbée à la longueur d'onde $\lambda$ s'écrit :

$$(I_0-I)/I_0 = 1 - \exp\{\sigma(\lambda)[UF_6]\, l\}$$

Pour une source lumineuse dont le flux énergétique surfacique au niveau du mélange gazeux est $\phi(\lambda)$ - puissance rayonnante reçue par unité de surface - le nombre de photons de flux énergétique $h\gamma$, absorbés par UF$_6$ par unité de surface sur un trajet optique $l$ s'écrit quand l'absorption $a = \sigma(\lambda)$ [UF$_6$] $l$ est faible :

$$\frac{\varphi(\lambda) \; \sigma(\lambda) \; [UF_6] \; l}{h\gamma}$$

Dans ces conditions où l'énergie rayonnante peut être considérée comme constante sur le trajet optique unitaire la concentration en UF$_6^*$ s'écrit :

$$[UF_6^*] = \frac{P_{UF_6}}{kT} \; \frac{\varphi(\lambda) \, \sigma(\lambda)}{h\gamma}$$

et le rapport [SF$_4$]/[UF$_6^*$] devient :

$$\frac{[SF_4]}{[UF_6^*]} = \frac{P_{SF_4}}{P_{UF_6}} \; \frac{h\gamma}{\varphi(\lambda)\,\sigma(\lambda)}$$

Ainsi pour obtenir selon le procédé de l'invention une production directement orientée vers le SF$_6$, on doit satisfaire à la condition [SF$_4$] / [UF$_6^*$] $\leq$ 1, ce qui peut être réalisé en agissant sur les pressions partielles de SF$_4$ et de UF$_6$ et sur la puissance rayonnante surfacique de la source ultraviolette. Ce facteur $h\gamma/\sigma(\lambda)$ qui augmente avec le nombre d'onde, prend la valeur de 0,65 J $\cdot$ cm$^{-2}$ photon$^{-1}$ à 266 nm, de sorte que la condition s'écrit:

$$\frac{P_{SF_4}}{P_{UF_6}} \leq 1,5 \; \varphi(\lambda)$$

avec $\varphi(\lambda)$ en watt/cm$^2$.

En revanche, si on veut orienter la réaction vers une production de S$_2$F$_{10}$, la condition s'écrit à 266 nm:

$$\frac{P_{SF_4}}{P_{UF_6}} \geq 1,5 \; \dot\varphi(\lambda)$$

avec $\varphi(\lambda)$ en watt/cm$^2$.

Ces conditions qui ont été établies quand l'absorption reste faible sur le trajet unitaire, ce qui représente pour $\lambda$ = 266 nm une pression de UF$_6$ de l'ordre de quelques centaines de Pa, permettent d'orienter les synthèses au niveau des proportions des réactants pour une puissance déterminée de la source ultraviolette.

Dans le procédé de l'invention, on règle également la pression partielle en UF$_6$ du mélange gazeux à une valeur appropriée pour obtenir une bonne absorption des photons et un bon rendement de la réaction de conversion du tétrafluorure de soufre en hexafluorure de soufre.

Généralement, la pression partielle de UF$_6$ est de 100 à 10 000 Pa et l'on utilise de préférence une

pression partielle en $UF_6$ élevée car le rendement de la réaction augmente avec la pression partielle en $UF_6$.

Ainsi, avec un rapport $pSF_4/pUF_6$ égal à environ 1, la quantité de $SF_6$ produite par rapport à la quantité de $SF_4$ présente au début de la réaction croît de quelques % à 50% quand la pression partielle de $UF_6$ augmente de 100 à 6000 Pa.

Lorsque l'on utilise un rapport $pSF_4/pUF_6$ de 1/3, la quantité d'hexafluorure de soufre produite par rapport à la quantité de tétrafluorure de soufre présente dans le mélange augmente de 10 à 60% quand la pression partielle de $UF_6$ augmente de 300 Pa à 9000 Pa.

Selon l'invention, le mélange gazeux peut aussi comprendre un gaz inerte tel que l'azote ou l'argon.

Pour mettre en oeuvre le procédé de l'invention, on peut utiliser n'importe quelle source de rayonnements ultraviolets émettant dans le domaine de longueurs d'ondes allant de 200 à 400 nm.

A titre d'exemple de telles sources, on peut mentionner les sources ultraviolettes étendues, émettant principalement dans la région des courtes longueurs d'onde, les lampes à arc xénon-mercure ou à mercure, les sources lasers continues ou pulsées, comme le laser $YAG:Nd^{3+}$ avec quadruplement de la fréquence, ou le laser à excimère KrF.

De préférence, on utilise des sources émettant dans le domaine de longueurs d'ondes allant de 200 à 340 nm dans lesquelles l'absorption des photons par l'hexafluorure d'uranium est plus importante comme le montre la figure 1. De ce fait, l'hexafluorure d'uranium excité se dissocie spontanément, ce qui permet d'obtenir un rendement quantique réactionnel atteignant la valeur de 1. On précise que ce rendement correspond au nombre de radicaux $SF_5$ formés par photon $h\gamma$ absorbé par $UF_6$.

En revanche, dans le domaine de longueurs d'onde allant de 340 à 400 nm où l'absorption des photons par l'hexafluorure d'uranium est plus faible, l'hexafluorure d'uranium excité ne se dissocie que collisionnellement et le rendement quantique est inférieur à 1.

Lorsque l'on utilise comme source de rayonnement ultraviolet un laser pulsé, l'irradiation est alors réalisée au cours d'impulsions de quelques ns qui sont très brèves comparées au temps de collision entre l'espèce excitée et le $SF_4$. Le rendement photonique global de la réaction dépend aussi de la géométrie de l'enceinte contenant le mélange gazeux soumis à l'irradiation et également du taux de particules d'$UF_5$ solide présentes dans le mélange irradié. On précise que le rendement photonique réactionnel global correspond au nombre de radicaux $SF_5$ formés par photon $h\gamma$ qui pénètre dans le réacteur (rendement <1).

Selon l'invention ce procédé de préparation de $SF_6$ et de $S_2F_{10}$ par réaction du $SF_4$ sur le $UF_6$ excité électroniquement par des photons UV est indépendant de l'énergie interne de $UF_6$, donc de sa température. Les réactions décrites sont commodément réalisées à la température ambiante, mais gardent la même efficacité si elles sont réalisés à des températures différentes, l'efficacité étant jugée à partir du rendement quantique réactionnel déjà défini. Dans une réalisation particulière un mélange de $UF_6$ et de $SF_4$ en présence d'un gaz neutre comme l'azote, l'argon ou l'hélium est refroidi par une détente supersonique dans une tuyère a une température de 80 à 120 K. Le rapport molaire $SF_4/UF_6$ est pris supérieur à 1, ce qui oriente la réaction vers la production de $S_2F_{10}$. Dans ce cas de réaction à basse température, le rendement photonique réactionnel global est moins bon qu'il ne l'est à température ambiante, toutes conditions étant égales par ailleurs, à cause d'une plus faible absorptivité des photons U.V. Cette diminution de $\sigma$ est évaluée à 30% à 250 nm.

A l'inverse quand on accroît l'énergie vibrationnelle du $UF_6$, soit en chauffant le mélange gazeux dans l'enceinte, soit en apportant des photons IR ou $UF_6$ comme par exemple dans la région des 16µm, par suite d'une augmentation de la section efficace dans la région des 220 à 340 nm, les photons U.V. sont plus rapidement absorbés qu'à la température ambiante. On précise que l'excitation IR à 16 µm est menée avec des fluences telles qu'elles ne provoquent pas de photodissociation directe de $UF_6$. Le ou les excitations IR seront réalisées par des lasers pulsés; dans ce cas la dissociation U.V. de $UF_6$ sera aussi réalisée par un laser. On précise que l'accroissement de la valeur de $\sigma$ entre 30°C et 300°C reste inférieur à 20% sur la région 200-270 nm de grande absorptivité.

Généralement, on met en oeuvre le procédé de l'invention de façon à préparer en continu de l'hexafluorure de soufre ou du décafluorure de soufre. Dans ce cas, on met en circulation dans une enceinte étanche un mélange gazeux comprenant du tétrafluorure de soufre et de l'hexafluorure d'uranium, on soumet le mélange gazeux circulant dans l'enceinte à une irradiation au moyen de rayonnements ultraviolets et on sépare du mélange gazeux sortant de l'enceinte les produits solides formés lors de la réaction. On récupère ainsi un mélange gazeux qui contient de l'hexafluorure de soufre, du décafluorure de soufre $S_2F_{10}$ ainsi que du $SF_4$ et de l'$UF_6$ n'ayant pas réagi.

Lorsqu'on veut adapter ce procédé à la préparation de l'hexafluorure de soufre, on soumet le mélange gazeux ainsi récupéré à un traitement thermique permettant de transformer en $SF_6$ le $S_2F_{10}$ qu'il contient, ceci peut être obtenu en portant le milieu gazeux sortant de l'enceinte à une température de 150 à 300°C pendant une durée suffisante pour obtenir la dismutation du $S_2F_{10}$ en $SF_4$ et $SF_6$ selon le schéma réactionnel suivant :

$$S_2F_{10} \rightarrow SF_4 + SF_6 \qquad (16)$$

De plus, si le mélange gazeux sortant de l'enceinte contient aussi du fluor gazeux produit selon la réaction (4) décrite précédemment, celui-ci réagira facilement lors du traitement thermique avec le $SF_4$ produit par la réaction de dismutation pour donner du $SF_6$.

On peut aussi orienter la réaction vers la production de $SF_6$ en apportant de l'énergie aux molécules de $S_2F_{10}$ pour les transformer en radicaux $SF_5$.

En effet, il est bien connu que le $S_2F_{10}$ constitue une source de radicaux $SF_5$; il suffit pour cela de la chauffer modérément entre 130 et 150°C pour avoir la rupture de la liaison S-S selon la réaction :

$$S_2F_{10} \rightarrow SF_5 + SF_5 \qquad (17)$$

la dismutation en $SF_4$ et $SF_6$ arrivant à des températures supérieures, comme cela est décrit par M.D. VOROB'EV, A.S. FILATOV, M.A. ENGLIN dans J. Gen. Chem. of the URSS 44 2677 (1974).

Il est aussi connu qu'une autre façon de déposer de l'énergie sur le $S_2F_{10}$ est de l'amener à absorber des photons :
- soit ultraviolets comme il est décrit par H.J. EMELEUS et K.J. PACKER dans J. Chem. Soc. 771 (1962),
- soit infrarouges avec un laser pulsé dans la région des 10 µm, ce qui est plus facile à fluence énergétique égale qu'avec le $SF_6$, comme il est décrit par J.L. LYMAN et K.M. LEARY dans J. Chem. Phys. 69 1958 (1978).

Dans ces deux cas, on observe les produits $SF_4$ et $SF_6$, le processus élémentaire étant celui d'une dissociation du $S_2F_{10}$ selon la réaction (17).

Il est à remarquer que cette photodissociation du $S_2F_{10}$ est involontairement déjà réalisée au cours de la photolyse de l'$UF_6$, et que expressément en présence d'$UF_6$ excité électroniquement la plus grande densité des radicaux $SF_5$ amenée par la dissociation U.V. de $S_2F_{10}$ privilégie les réactions conduisant à la formation de $SF_6$ à savoir les réactions (7), (8), (9) et (10) décrites précédemment.

Aussi, selon une première variante de mise en oeuvre du procédé de l'invention, on oriente les réactions vers la production de $SF_6$ en produisant dans la cellule où le mélange gazeux est irradié des radicaux $SF_5$ à partir des molécules de $S_2F_{10}$ produites dans l'enceinte de réaction. Ceci peut être obtenu par chauffage de l'enceinte à une température de 130 à 400°C pour obtenir la réaction (17).

Selon une deuxième variante de mise en oeuvre du procédé, on produit les radicaux $SF_5$ dans l'enceinte en soumettant de plus le mélange gazeux circulant dans l'enceinte à une irradiation au moyen de rayonnements infrarouges ayant une longueur d'onde de 10 à 12 µm.

Ceci peut être effectué dans la région des longueurs d'ondes de 10 µm et plus particulièrement entre 10,5 et 11 µm. Dans ce domaine de longueurs d'ondes, on peut obtenir une photodissociation, en particulier dans la région correspondant à la vibration $\gamma_3$ de $S_2F_{10}$ centrée à 938 $cm^{-1}$ qui présente une forte section efficace. Dans ce but, on peut utiliser un laser $CO_2$ continu dont le rendement est particulièrement bon dans cette région. Il est à noter que le flux énergétique à 10 µm n'a aucune action sur l'hexafluorure d'uranium qui n'absorbe pas cette fréquence, les photons de 1000 $cm^{-1}$ d'énergie ayant peu de poids vis-à-vis des énergies nécessaires pour assurer la dissociation de $UF_6$, soit environ 25000 $cm^{-1}$.

Ainsi, par irradiation du mélange gazeux avec un laser $CO_2$ continu accordé sur la raie P 26 et dont la puissance rayonnante est ajustée pour permettre le chauffage du $S_2F_{10}$ à des températures de 130 à 300°C, on provoque sa dismutation selon la réaction (16) donnée précédemment sans réagir avec $UF_6$.

L'avantage de ces variantes où la phase gazeuse est chauffée au-dessus de 130°C, est qu'elle relâche la contrainte qui pèse sur le rapport molaire des réactifs pour la production privilégiée de $SF_6$, si débit gazeux et température sont adaptés.

Ainsi jusqu'à des températures de 170°C on écrit la réaction

$$2UF_6 + SF_4 + h\gamma \rightarrow 2UF_5 + SF_6$$

le solide recueilli est du $UF_5$ cristallisé de variété cristallographique $\alpha$.

Pour des températures supérieures, de 170 à 260°C la phase solide comporte en plus de $UF_5$, du $U_2F_9$ en accord avec la relation :

$$4UF_6 + 3SF_4 + h\gamma \rightarrow 3SF_6 + 2U_2F_9$$

Le $U_2F_9$ pur est obtenu à la sortie du réacteur si la pression partielle de $UF_6$ à cet endroit est suffisamment basse, par exemple inférieure à 1000 Pa et le débit gazeux assez lent pour permettre l'entière dismutation du $S_2F_{10}$ en $SF_6$ et en $SF_4$, ainsi que de la dismutation de l'aérosol de $UF_5$ formé, ce qui est réalisé selon la relation :

$$3UF_5 \rightarrow U_2F_9 + UF_6$$

quand les agrégats de $UF_5$ sont sous la forme de polymères de quelques nm de diamètre, cette dismutation étant favorisée par une forte densité moléculaire des partenaires de collison gazeux. Par ailleurs, pour ne pas favoriser la croissance des polymères de $UF_5$ on maintiendra la densité de $UF_6$ à une valeur inférieure à $10^{14} cm^{-3}$.

Enfin, pour des températures comprises entre 300 et 400°C, le produit solide comporte en plus la variété $UF_4$. Si de plus la pression partielle en fin de réaction photochimique est limitée à 1000 Pa pour le réacteur à 400°C on observe la réaction globale suivante :

$$UF_6 + SF_4 + h\gamma \rightarrow UF_4 + SF_6$$

le fluorure d'uranium $UF_4$ stoechiométrique, pur, ainsi obtenu provenant d'une dismutation en phase gazeuse du $U_2F_9$ selon la relation :

$$2U_2F_9 \rightarrow 3UF_4 + UF_6.$$

La densité de $UF_6^*$ sera volontairement limitée à $10^{14}cm^{-3}$ pour limiter la taille des fluorures d'uranium $UF_5$ et de valence intermédiaire entre 4 et 5 à quelques dizaines de nanomètres.

Selon une version particulière de l'invention tournée vers la synthèse de $S_2F_{10}$, le gaz $UF_6$ peut être réduit en solide $UF_4$ à la température ambiante directement après absorption de deux photons U.V. de longueurs d'ondes identiques ou différentes mais comprises entre 200 et 340 nm selon le schéma :

$$UF_6 + h\gamma \rightarrow UF_4 + 2F$$

Le gaz $UF_6$ peut aussi être réduit à l'état $UF_4$ en passant par un stade intermédiaire comme $UF_5^*$, ce qui est réalisé par absorption de deux photons, dont l'un est un photon U.V. de longueur d'onde comprise entre 200 et 340 nm, et l'autre un photon visible en U.V. de longueur d'onde comprise entre 200 et 500 nm selon le schéma :

$$UF_6 + h\gamma \rightarrow UF_5^* + F^*$$
$$UF_5^* + h\gamma \rightarrow UF_4^* + F^*$$

Dans ces synthèses tournées vers la production de $S_2F_{10}$ et réduction de $UF_6$ en $UF_4$ on maintient le rapport $SF_4/UF_6 > 1$ et une pression de gaz $UF_6$ limitée à 100 Pa.

D'une façon générale, pour ce procédé de préparation du $SF_6$ et du $S_2F_{10}$, il doit être noté que dans son principe, cette photochimie entre $SF_4$ et $UF_6$ excité électroniquement n'est pas limitée par la pression totale des réactifs en présence. La limitation provient de la possibilité pour la source lumineuse de fournir des photons en énergie et nombre suffisant pour dissocier $UF_6$. Le gaz $UF_6$ peut toujours être introduit dans le réacteur sous une concentration suffisante pour que les photons d'énergie comprise entre 200 et 340 nm soient absorbés, c'est-à-dire pour que le produit $\sigma(\lambda)[UF_6]l \gg 1$, ce qui représente par exemple une pression de $UF_6$ de 15000 Pa quand 99% des photons de 266 nm de longueur d'onde sont absorbés sur un trajet optique de 1 cm.

Par contre il est bon de souligner que la présence des particules de fluorures d'uranium formées peut entraver la propagation du faisceau lumineux. Il est bien connu qu'un milieu contenant des particules diffringentes en suspension diffuse la lumière, et plus particulièrement les courtes longueurs d'onde. Lord Rayleigh a montré que cette intensité de lumière diffusée varie en raison inverse de la quatrième puissance de la longueur d'onde. Si $d_i$ est de diamètre d'une classe d'agrégats en concentration locale $n_i$ le facteur de diffusion de Rayleigh s'écrit :

$$J_i = n_i \, (\frac{d_i}{2})^6$$

ce qui devra être intégré sur le spectre de répartition en taille des particules de fluorures d'uranium. L'écoulement lent réalisé par le débit gazeux et les forces gravitationnelles contribuent à évacuer les particules formées du réacteur et à ne pas entraver la propagation du faisceau lumineux. En cela une forte pression de $UF_6$ favorise la bonne absorption isotrope des photons, puisque le rayonnement ultraviolet diffusé par l'aérosol de particules uranifères peut être absorbé par le gaz $UF_6$ avant d'être perdu contre la paroi du réacteur.

Pour optimiser la production des fluorures de soufre $SF_6$ et $S_2F_{10}$ on adapte de plus :
- le débit de $SF_4$ mis en circulation dans l'enceinte,
- la pression d'$UF_6$ et le rapport $[SF_4]/[UF_6]$,
- la puissance de la source lumineuse, la densité de flux et la forme du faisceau,
- les grandeurs géométriques de l'enceinte et la position du faisceau par rapport au mouvement du mélange gazeux,
afin d'utiliser au mieux les photons de la source lumineuse, et de recycler le moins possible les réactifs non transformés.

On veille en particulier à ne pas conduire exagérément une photochimie de l'$UF_6$ en l'absence de $SF_4$, les rendements quantiques de dissociation devenant moins favorable à cause d'une possible refluoration des $UF_5$ monomères ou polymères par les atomes de fluor très réactifs, et les molécules de fluor.

Dans le procédé de l'invention, le tétrafluorure de soufre introduit dans le mélange gazeux est tout d'abord soumis à un traitement de purification pour éliminer les composés tels que le fluorure de thionyle $SOF_2$ ou les sous fluorures de soufre qu'il peut contenir, afin de ne transformer photochimiquement que le $SF_4$ avec le $UF_6$ excité en $SF_6$ et $S_2F_{10}$ recherchés.

Le fluorure de thionyle sera éliminé par condensation fractionnée ou par chromatographie en phase gazeuse. Les sous fluorures de soufre seront transformés en $SF_4$ et soufre, soit par compression à la température ambiante, soit après liquéfaction à la température de l'azote liquide, ce qui laisse une phase solide cristallisée de soufre et un gaz $SF_4$. On peut aussi réaliser cette purification catalytiquement, par exemple avec HF pour obtenir $S+SF_4$. Dans le cas de fortes teneurs en impuretés de préférence le $SF_4$ sera extrait spécifiquement du mélange en réalisant un complexe solide avec le seul $SF_4$, comme c'est le cas avec $SbF_5$ ou $BF_3$ pour obtenir respectivement $SF_4.SbF_5$ et $SF_4.BF_3$, complexes qui se dissocient thermiquement quand les impuretés volatiles ont été éliminées par pompage.

De préférence dans le procédé de l'invention lorsque les impuretés sont jugées pour être en quantité non excessives, et ceci vaut en particulier pour les sous fluorures de soufre, le $SF_4$ n'est pas purifié et le $S_2F_2$ réagira chimiquement avec $UF_6$ pour conduire aux composés recherchés $SF_6$ et $S_2F_{10}$. La réaction photochimique entre $S_2F_2$ et $UF_6$ s'effectue en deux étapes dont la première conduit à $SF_4$ selon le schéma :

$$4UF_6 + S_2F_2 + h\gamma \rightarrow 4UF_5^* + 2SF_4$$

et la seconde est la réaction élémentaire 5 déjà écrite, de sorte que globalement on a :

$$6UF_6 + S_2F_2 + h\gamma \rightarrow 6UF_5^* + 2SF_5^*$$

Toutefois, ce procédé photochimique de fluoration par les atomes hautement réactifs de fluor fournis par le gaz $UF_6$ apparaît comme moins avantageux que les traitements chimiques classiques de fluoration, mais cette procédure peut se justifier dans le cas où de faibles quantités de sous fluorures de soufre sont présentes dans le $SF_4$.

D'autres caractéristiques et avantages de l'invention apparaîtront mieux à la lecture de la description qui suit donnée bien entendu à titre illustratif et non limitatif en référence au dessin annexé sur lequel :

- la figure 1, déjà décrite, représente la section efficace d'absorption ultraviolette de l'hexafluorure d'uranium (en cm2) en fonction de la longueur d'onde λ (en nm),
- la figure 2 est une représentation schématique d'une installation pour la mise en oeuvre du procédé de l'invention, et
- la figure 3 est une représentation schématique d'une variante de réalisation de l'installation représentée sur la figure 2.

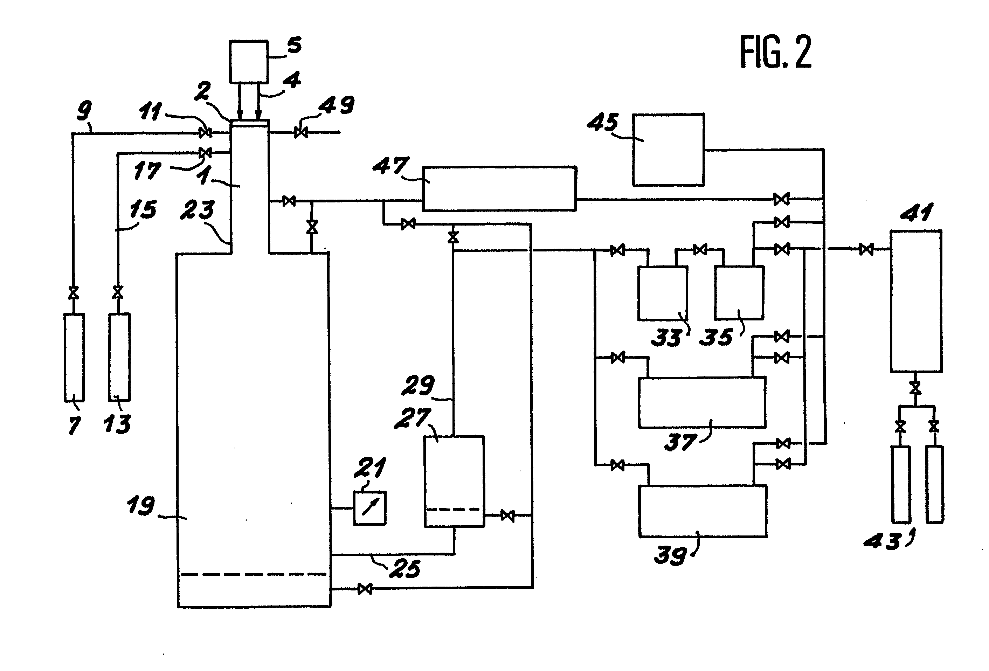

Sur la figure 2, on a représenté une installation permettant de préparer en continu des fluorures de soufre de formule $SF_6$ et $S_2F_{10}$. Cette installation comporte un réacteur photochimique 1 réalisé par exemple en monel[R] ou en nickel comportant à sa partie supérieure une fenêtre 2 transparente aux rayonnements 4 provenant d'une source de rayonnements ultraviolets 5. La fenêtre peut être réalisée en fluorure cristallin, par exemple en fluorure de calcium, en fluorure de baryum, en fluorure de magnésium, en fluorure de lithium ou en verre fluoré.

Du tétrafluorure de soufre peut être introduit dans le réacteur 1 à partir de la source 7 de tétrafluorure de soufre par la canalisation 9 munie de la vanne 11 à proximité de la fenêtre transparente 2. De l'hexafluorure d'uranium peut être introduit également dans le réacteur 1 à proximité de la fenêtre 2 à partir de la source 13 par la canalisation 15 munie de la vanne 17. A sa partie inférieure, le réacteur photochimique 1 est en communicaton avec un volume de tranquillisation 19 dont les dimensions sont calculées pour faciliter la coagulation des produits solides, soit des polymères de $UF_5$ ou des autres fluorures d'uranium comme $U_2F_9$ et $UF_4$, qui quittent le réacteur 1. Ces produits solides sont collectés à la base du volume 19 et ils peuvent en être évacués par des moyens classiques, non représentés sur le dessin. La pression dans le réacteur peut être contrôlée par un manomètre 21 placé sur le volume 19 et le réacteur photochimique 1 peut être isolé du volume 19 par l'intermédiaire d'un obturateur 23.

Le mélange gazeux quitte le volume 19 par la canalisation 25 et traverse ensuite un filtre 27 qui permet d'arrêter les ultimes particules submicroniques en suspension dans le mélange gazeux. Les gaz sortent alors du filtre 27 par la conduite 29 qui les dirige vers un système de purification constitué par exemple par un ensemble de pièges froids 33, 35, 37, 39 permettant de séparer et de récupérer le fluorure de soufre désiré ($SF_6$ ou $S_2 F_{10}$).

En effet, les analyses effectuées sur le mélange gazeux sortant du filtre par la conduite 29 montrent que celui-ci est constitué en général de $SF_4$, $SF_6$, $S_2F_{10}$ et d'$UF_6$. Des sous-fluorures de soufre peuvent être aussi présents comme impuretés. Aussi, il est nécessaire de séparer le fluorure $S_2F_{10}$ ou $SF_6$ des autres constituants.

Dans le cas d'une synthèse souhaitée de $SF_6$, la photochimie est conduite dans le réacteur 1 de sorte que le $SF_4$ introduit soit minoritaire par rapport à l'$UF_6$. Le mélange gazeux au niveau de la conduite 29 sera essentiellement composé du produit $SF_6$ avec du $S_2F_{10}$ et du réactif $UF_6$ n'ayant pas réagi ainsi que des traces possibles de $SF_4$ et éventuellement de fluor provenant d'un défaut de $SF_4$ en fin de réaction.

La séparation du $SF_6$ des autres gaz du mélange est effectuée par piégeage sélectif des vapeurs de plus faible tension de vapeur. Le piège froid 33 arrête le $SF_4$ et les gaz plus facilement condensables ($S_2F_{10}$ et $UF_6$). Pour cela le piège froid est maintenu à une température de l'ordre de 135 à 145 K à laquelle le $SF_6$ a une tension de vapeur de l'ordre de 100 Pa. Si nécessaire, un deuxième piège froid 35 placé en aval et maintenu à une température égale ou inférieure au premier remplira la même fonction et améliorera l'efficacité des séparations gazeuses entreprises. Le SF$_6$ qui reste gazeux dans ces pièges froids est évacué alors vers un système de purification 41. Dans ce système les traces de SF$_4$, F$_2$, sous-fluorures de soufre, voire d'UF$_6$ peuvent être facilement retenues par hydrolyse dans une solution alcaline; les composants acides –HF, F$_2$– peuvent être arrêtés par absorption; le SF$_6$ est enfin séché par condensation de l'eau, soit à basse température, par exemple à 200 K, soit par l'action d'un déshydratant solide. On peut ensuite stocker le SF$_6$ purifié dans les récipients 43 par condensation à 77 K. Pour pallier tout risque d'hydrolyse des produits-en circulation dans l'installation, l'opération de purification 41 est avantageusement réalisée sur un montage annexe.

D'autres pièges froids tels que les pièges 37 et 39 montés en parallèle avec les pièges 33 et 35 assurent alternativement les opérations de piègeage sélectif des constituants du mélange gazeux. Lorsque ces pièges ne sont pas en fonctionnement, on les réchauffe et on récupère ainsi dans le système d'extraction de gaz 45 les vapeurs produites lors de leur réchauffement. Dans les variations de production de SF$_6$ qui ont pour but de dissocier le S$_2$F$_{10}$, ou empêcher sa formation, à savoir chauffage du mélange gazeux par absorption de photons à 10 µm, ou chauffage du réacteur, il n'y aura pas de phase de séparation portant sur S$_2$F$_{10}$.

D'autres méthodes peuvent être mises en œuvre pour la séparation du SF$_6$ du mélange gazeux, comme la chromatographie en phase gazeuse ou l'adsorption spécifique réversible du SF$_4$ et de l'UF$_6$ sur adsorbant. Des manomètres tels que 21 permettent de contrôler les pressions dans les diverses parties du circuit; de même des débitmètres (non représentés) effectuent la mesure des différents débits gazeux.

Cette même installation peut assurer aussi la synthèse préférentielle du décafluorure de soufre. Le mélange gazeux introduit sera majoritaire en SF$_4$, de sorte que l'UF$_6$ soit en grande partie épuisé à la sortie du réacteur photochimique 1. Dans ce cas, le mélange gazeux dans la conduite 29 est essentiellement constitué de SF$_4$ et S$_2$F$_{10}$.

Après filtration en 27, les gaz pénètrent directement dans le piège froid 33 pour l'opération de séparation entre SF$_4$ et S$_2$F$_{10}$. La température du piège sera avantageusement réglée dans la région des 170 à 180 K de sorte que le S$_2$F$_{10}$ soit seul piégé laissant passer le SF$_4$ qui est extrait par le système d'extraction des gaz 45. La purification du S$_2$F$_{10}$ est réalisée ensuite comme cela a été dit pour le SF$_6$, après réchauffage du piège froid 33.

Sur la figure, la référence 47 représente un ensemble permettant de faire le vide dans l'installation et de réaliser une fluoration préalable de ses diverses parties. La référence 49 désigne une conduite d'introduction d'un gaz neutre additionnel rigoureusement anhydre sous la fenêtre d'entrée 2.

Dans cette installation, on prend des précautions particulières pour éviter les dépôts de UF$_5$ sur la fenêtre optique 2 transparente aux rayonnements ultraviolets. Ceci est obtenu en positionnant la fenêtre de façon appropriée, par exemple en la positionnant horizontalement comme cela est représenté sur la figure 2 afin de ne pas favoriser le dépôt des produits solides sous l'effet des forces gravitationnelles et inertielles. On pourrait aussi utiliser une fenêtre inclinée jusqu'à la verticale sur une paroi latérale. Afin d'empêcher une adhésion des produits solides sur la fenêtre 2, on peut aussi introduire un gaz neutre par la conduite 49, ce gaz peut être de l'azote ou de l'argon et il est recueilli à la sortie de l'installation par tout moyen approprié. Dans le cas où l'on utilise un faisceau collimaté, on peut limiter le débit de balayage par le gaz neutre en le maintenant localement dans la région à protéger, c'est-à-dire en l'introduisant en surpression et en le mettant en circulation par des entrées et par des sorties propres. Dans ce cas, un diaphragme peut être présent afin de limiter la fuite du gaz de balayage dans la partie réactionnelle du réacteur et d'assurer le passage du faisceau éventuellement focalisé sur cet endroit. Au niveau du volume de confinement, grâce à une pompe de circulation, le gaz de balayage extrait est directement réinjecté sous la fenêtre optique après avoir traversé un piège froid de retenue des vapeurs condensables indésirables. Pour protéger la fenêtre, on peut encore utiliser un système mécanique de déplaement des dépôts formés sur celles-ci hors de la zone d'éclairement.

Les exemples suivants donnés bien entendu à titre non limitatif illustrent le procédé de l'invention.

EXEMPLE 1

Dans cet exemple, après avoir dégazé à chaud le récteur 1 et l'avoir traité avec un agent fluorant pour empêcher les réactions parasites, on introduit dans celui-ci, fermé à sa partie inférieure par le dispositif d'obturation 23, un mélange de SF$_4$ et de UF$_6$ sous des pressions partielles de 135 Pa en SF$_4$ et de 405 Pa en UF$_6$. La source de rayonnements ultraviolets 5 est constituée par un laser YAG:Nd$^{3+}$ muni d'un doubleur et d'un quadrupleur de fréquence délivrant un rayonnement à 266 nm, le diamètre du faisceau laser étant de 0,9 cm et les impulsions ayant une énergie rayonnante de 5 mJ à la cadence de 2 Hz. La puissance rayonnante moyenne est de 10 mW. Au bout de 2 min, la réaction photochimique est complète et les produits gazeux formés, analysés par spectroscopie vibrationnelle, sont SF$_6$ sous une pression partielle de 54 Pa et du S$_2$F$_{10}$ sous une pression partielle de 40 Pa. La proportion de SF$_6$ produite par rapport au SF$_4$ consommé est donc de 40%. Les produits solides collectés à la base du réacteur 1 sont analysés comme étant du UF$_5$ exempt d'impuretés.

Si l'on utilise comme source de rayonnements ultraviolets, une source continue à même flux énergétique surfacique de 14 mW.cm$^{-2}$, on obtient une plus faible proportion de SF$_6$. Ceci est dû aux fortes puissances crêtes qui sont ici d'environ 5 mW.cm$^{-2}$, obtenues avec le laser à impulsions d'une durée d'environ 30 ns, qui permettent de créer une forte densité de $UF_6$ dans le volume irradié, et par suite une, forte densité d'atomes de fluors réactifs favorables à la formation de $SF_6$.

EXEMPLE 2

- Dans cet exemple, où l'on opère dans la même installation que l'exemple 1, la source lumineuse est une lampe à vapeur de mercure à haute pression dont on utilise les photons émis autour de 245 nm sur une largeur $\Delta\lambda$ de 45 nm, pour lesquels le flux énergétique est de 100 mW, le faisceau ayant un diamètre de 3 cm, ce qui correspond à une densité de flux dans le réacteur 1 de 14 mW.cm$^{-2}$. Le mélange gazeau de $SF_4$ et de $UF_6$ introduit dans le réacteur a des pressions partielles en $SF_4$ et $UF_6$ telles que le rapport $pSF_4/pUF_6$ soit égal à 1 et on réalise plusieurs essais en faisant varier la pression partielle en $UF_6$ de 100 à 6000 Pa. Dans ces conditions, la quantité de $SF_6$ produite mesurée enfin de réaction à l'épuisement du $SF_4$, croît avec la pression partielle en $UF_6$, le rapport $pSF_6/pSF_4$ augmentant de quelques % à 50% lorsque $pUF_6$ varie de 100 à 6000 Pa.

Si l'on adopte un rapport $pSF_4/pUF_6$ de 1/3 et que l'on réalise plusieurs essais en faisant varier $pUF_6$ de 100 à 9000 Pa, la quantité de $SF_6$ produite augmente également, le rapport $pSF_6/pSF_4$ variant de 10 à 60% dans cette gamme de pressions partielles en $UF_6$.

On réalise d'autres essais dans les mèmes conditions, mais en utilisant une pression partielle en $SF_4$ de 100 Pa et en faisant varier le rapport $pSF_4/pUF_6$ de 1/2 à 1/10. Dans ces conditions, la quantité de $SF_6$ produite augmente lorsque le rapport diminue, le rapport $pSF_6/pSF_4$ augmentant de 5 à 40% quand $pSF_4/pUF_6$ varie de 1/2 à 1/10.

Ainsi, on constate que dans les essais, la quantité de $SF_6$ produite par rapport à la quantité de $SF_4$ présente augmente avec la pression partielle de $UF_6$ pour une énergie lumineuse constante.

Dans ces essais, le $SF_4$ introduit qui n'a pas réagi pour conduire au $SF_6$, est transformé en $S_2F_{10}$. Ainsi, quand $pSF_6/pSF_4$ égale 60%, le $S_2F_{10}$ produit est dans le rapport $pS_2F_{10}/pSF_4=20\%$. En effet, si le $SF_4$ introduit est pur, le réacteur soigneusement préparé comme il a été dit, à l'épuisement du $SF_4$, les seuls produits gazeux observés sont $SF_6$, $S_2F_{10}$ et éventuellement l'excès d'$UF_6$.

Dans le cas où des impuretés comme le fluorure de thionyle sont présentes dans le $SF_4$, comme cela est souvent le cas, les photoréactions suivantes en présence d'$UF_6$ peuvent avoir lieu :

$$2UF_6 + SOF_2 + h\gamma \rightarrow 2UF_5 + SOF_4$$
$$2UF_6 + SOF_2 + h\gamma \rightarrow 2UF_5 + 1/2SO_2F_2 + 1/2SF_6$$

conduisant à la formation de perfluorure de thionyle et de fluorure de sulfuryle indésirables.

EXEMPLE 3

Dans cet exemple, on réalise la préparation en continu de $SF_6$ à température ambiante dans l'installation de la figure 2 en utilisant un réacteur photochimique ayant un diamètre de 3 cm et une longueur de 50 cm. On opère sous une pression partielle de 700 Pa de $UF_6$ en introduisant le mélange $SF_4$-$UF_6$ dans le rapport molaire 1/5, le débit massique de $SF_4$ étant de 2,3 g/h et celui de $UF_6$ de 37 g/h. La fenêtre de $CaF_2$ est balayée par un courant d'azote dont le dèbit est fixé à 10 g/h introduit en 49. On utilise comme source de rayonnements ultraviolets 5 une lampe à haute pression xénon-mercure émettant sur tout le spectre ultraviolet mais dont l'énergie dans la région des 215 à 300 nm est évaluée à 4-5 W, le faisceau étant focalisé dans le réacteur. Dans ces conditions, la production de $SF_6$ à la sortie du réacteur chimique s'établit à 1 g/h, celle de $S_2F_{10}$ à 1,7 g/h.

EXEMPLE 4

Dans cet exemple on réalise la préparation en continu de $S_2F_{10}$ dans la même installation que l'exemple 3. Les réactants sont introduits dans le rapport $SF_4$-$UF_6$ de 2/1, la pression de $UF_6$ étant de 700 Pa, le débit massique de $SF_4$ de 6,5 g/h et celui de $UF_6$ de 16 g/h. Dans cette expérience les réactants sont introduits séparément; le $SF_4$ pénètre par la vanne 11 et sert comme gaz de balayage pour la protection de la fenêtre de $CaF_2$ contre les dépôts de $UF_5$. La source ultraviolette étant la lampe xénon-mercure fonctionnant dans les conditions décrits dans l'exemple 3, la production de $S_2F_{10}$ à la sortie du réacteur chimique s'établit à 3,7 g/h, le $SF_6$ étant présent pour moins du pour cent. Le solide $UF_5$ amorphe ne retient pas de soufre comme impureté, il est produit à raison de 9,5 g/h.

EXEMPLE 5

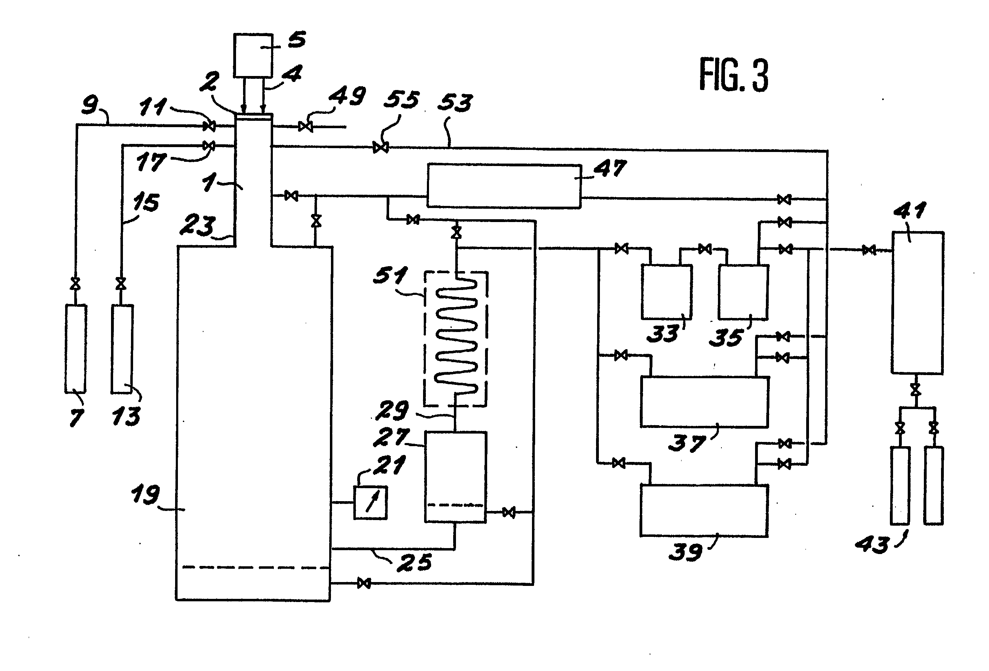

Dans cet exemple, on utilise l'installation représentée sur la figure 3. Cette installation est identique à celle représentée sur la figure 2 et l'on a donc utilisé les mèmes références pour désigner les mèmes constituants, mais elle comprend de plus un four de pyrolyse 51 disposé sur la conduite 29 sortant du filtre 27 pour convertir le $S_2F_{10}$ en $SF_6$.

On met en circulation le mélange de SF$_4$ et de UF$_6$ dans les mêmes conditions de débit et de pression que celles de l'exemple 3 et on utilise également une lampe à haute pression xénon-mercure émettant sur tout le spectre ultraviolet, dont l'énergie dans la région de 215 à 300 nm arrivant sur la cellule est évaluée à 4–5 W. A la sortie du filtre 27, les gaz sont introduits dans le four de pyrolyse 51 porté à 210°C et ayant un volume de 10 l de façon à convertir le S$_2$F$_{10}$ en SF$_6$. Dans ces conditions, on obtient 1,9 g/h de SF$_6$ et 9 g/h de UF$_5$ amorphe ultra pur.

On précise que la température du four est choisie de telle sorte que pendant le temps de transit du mélange la majorité du S$_2$F$_{10}$ soit décomposée. Par exemple à 190°C le temps de demi-réaction de la dismutation de S$_2$F$_{10}$ sous une pression partielle de quelques milliers de Pa est de 4 min. Aussi, la température contrôlée du four est comprise entre 150°C et 300°C. Dans le cas où le mélange gazeux à la sortie du réacteur photochimique contient du fluor gazeux, il réagira facilement avec SF$_4$ selon la réction connue :

$$SF_4 + F_2 \rightarrow SF_6$$

A la sortie du four 51, le mélange gazeux outre SF$_6$ contient du SF$_4$ et de l'UF$_6$ qui seront recyclés par la conduite 53. Pour cela, on effectue une séparation par la méthode dite de la condensation fractionnée en dynamique dont le principe en lui-même est bien connu.

Le premier piège froid 33 arrête préférentiellement le SF$_4$ et les gaz plus facilement condesables tels que l'UF$_6$ et éventuellement les traces de S$_2$F$_{10}$, quand sa température est d'environ 135 à 145°K. Le deuxième piège froid 35 améliore la capacité et augmente l'efficacité de la séparation.

Le SF$_6$ gazeux dans ces pièges est dirigé vers le stockage 43 après purification comme il a été dit précédemment.

Le réchauffage des pièges permet ensuite aux vapeurs préalablement condensées de devenir gazeuses. Sous forme d'un mélange homogène, de SF$_4$ et d'UF$_6$ avec des traces de SF$_6$ (controlé par analyses in situ), ces gaz peuvent être injectés au niveau de la vanne de débit 55 en quantités adaptées aux besoins par la conduite de recyclage 53. Les alimentations directes en SF$_4$ et UF$_6$ par les vannes 11 et 17 en seront réduites d'autant.

EXEMPLE 6

Dans cet exemple, on utilise un réacteur photochimique 1 de 1,5 cm de diamètre et de 10 cm de longueur alimenté par un mélange SF$_4$-UF$_6$ dans le rapport 1/3, la pression dans le réacteur étant de 4000 Pa et les débits massiques de SF$_4$ de UF$_6$ et de N$_2$ étant respectivement de 45 g/h de 450 g/h et de 100 g/h. La source de rayonnements ultraviolets est un laser pulsé à KrF fonctionnant à la cadence de 250 Hz et ayant une puissance moyenne de 100 W qui éclaire strictement la fenêtre d'entrée du réacteur après focalisation.

A la sortie du réacteur chimique, la production de SF$_6$ s'élève à 25 g/h. Dans les conditions de cette expérience, la vitesse moyenne des réactifs est d'environ 150 cm/s. Avec les débits utilisés on évite le remélange entre les réactifs frais et les produits de la réaction, ce qui permet d'assurer une bonne évacuation de l'aérosol de UF$_5$.

Comme dans l'exemple précédent, on soumet le mélange gazeux sortant du filtre 27 à un traitement de pyrolyse dans un réacteur ayant un volume de 10 l, chauffé à 210°C. Dans ces conditions, on obtient 43 g/h de SF$_6$ et 200 g/h de UF$_5$ amorphe, chimiquement pur.

EXEMPLE 7

Cet exemple illustre l'utilisation d'un chauffage du mélange gazeux dans le réacteur photochimique 1 pour orienter la réaction vers la production d'hexafluorure de soufre SF$_6$. Dans ce cas, on utilise l'installation représentée sur la figure 2, mais on ajoute autour du réacteur photochimique 1 une enceinte thermostatique non représentée sur le dessin qui permet de porter le contenu du réacteur à des températures de 130 à 400°C. Pour éviter qu'il ne se produise une corrosion à chaud du photoréacteur avec l'hexafluorure d'uranium, on utilise un photoréacteur en cuivre recouvert d'un dépôt de nickel.

Par ailleurs, pour favoriser les échanges thermiques entre les parois chaudes du réacteur et les polymères d'UF$_5$ formés dans celui-ci, on ajoute un gaz neutre comme de l'azote ou de l'argon, sous une pression de 2000 Pa à 5000 Pa par la conduite 49, le gaz neutre servant de protection pour le fenêtre contre les dépôts de UF$_5$.

On réalise tout d'abord un premier essai de préparation en continu d'hexafluorure de soufre en utilisant les conditions de débit et de pression de l'exemple 3, mais en chauffant le photoréacteur 1 à une température de 130 à 150°C. Dans ces conditions, on obtient à la sortie du réacteur une plus forte concentration en hexafluorure de soufre que dans l'exemple 3, de l'ordre de 20 à 40%. Le produit solide recueilli à la base du volume 19 est du UF$_5$ cristallisé rigoureusement pur.

Dans un deuxième essai, on opère à une température de 200°C dans le réacteur 1 clos comme dans l'exemple 1 en utilisant un rapport molaire SF$_4$/UF$_6$ < 1/2. Dans ces conditions, la réaction photochimique conduit préférentiellement à la production de SF$_6$ quelle que soit la pression initiale du mélange et l'on obtient à la base du réacteur 1 du UF$_5$ qui cristallise sous la forme $\alpha$.

Ainsi, en utilisant un excès de $UF_6$ par rapport au $SF_4$ et en adaptant les débits gazeux, la température et la longueur du réacteur pour que le $S_2F_{10}$ formé soit thermiquement dismuté dans le réacteur photochimique avant d'entrer dans le volume 19, on peut obtenir des taux de production en $SF_6$ et $UF_5$ comparables à ceux que l'on obtient en soumettant les gaz sortant du volume 19 à une pyrolyse. De plus, lorsque l'on réalise la réaction à chaud, on favorise la cristallisation et le grossissement des produits d'uranium solides qui deviennent plus faciles à séparer de la phase gazeuse et à extraire de l'installation. Lorsque la température du réacteur de l'installation. Lorsque variété cristalline de $UF_5$ stoechiométrique ultra pure recueillie est la forme $\alpha$.

EXEMPLE 8

Dans cet exemple, on réalise également la réaction photochimique à chaud comme dans l'exemple 7, orienté vers la production de $SF_6$, mais permettant de réduire le $UF_6$ à une valence inférieure à 5 sous la forme de $U_2F_9$.

Dans un premier essai on opère à la température de 200°C dans le réacteur clos comme dans le 2ème essai de l'exemple 7, mais en utilisant un rapport molaire $SF_4/UF_6$ supérieur à celui de cet essai. Si on adopte un rapport molaire de $SF_4/UF_6$ supérieur à environ 5/7, on distingue deux phases dans la réaction. Tout d'abord, il se produite une transformation rapide du $SF_4$ en $SF_6$ qui est d'autant plus rapide que la teneur en $UF_6$ initiale est faible et cela pratiquement jusqu'à l'épuisement de l'hexafluorure d'uranium gazeux. Cette première phase est suivie d'une réaction cinétique plus lente qui est accélérée avec la température et qui dépend du rapport molaire $SF_4/UF_6$ appelé m.

Ainsi lorsque le rapport molaire $SF_4/UF_6$ égal 1, à l'arrêt de la réaction, c'est-à-dire quand la pression de $SF_6$ dans le réacteur ne progresse plus, la poudre recueillie à la base du réacteur clos 1 est un solide cristallisé identifié aux rayons X comme un mélange de $\alpha UF_5$ et $U_2F_9$.

Si l'on opère avec une pression initiale d'hexafluorure d'uranium de 675 Pa et avec un rapport molaire $SF_4/UF_6$ de 1, réacteur étant à 200°C, en présence de 3000 Pa de $N_2$ et la source de rayonnements ultraviolets étant constituée par une lampe à vapeur de mercure délivrant 100 mW autour de 245 nm, plus de 65% du $SF_4$ est transformé en $SF_6$ après 5 min d'irradiation et les produits solides recueillis sont un mélange de $\alpha UF_5$ et $U_2F_9$.

Ainsi, à faible pression du mélange de $UF_6$, inférieures à 1000 Pa, et quand le rapport molaire (m) de $SF_4/UF_6$ > 5/7. l'hexafluorure de soufre photochimiquement produit est dans le rapport d'environ 0,65/m.

Les expériences conduites dans des conditions de plus basses densités de $UF_6$ réalisées en diminuant soit la pression de $UF_6$, soit la puissance de la source lumineuse permettent d'obtenir une meilleure conversion du $SF_4$ en $UF_6$. Un résultat analogue est observé quand on élève la température du réacteur. Ainsi quand le réacteur est maintenu à 200-300°C et la réaction photochimique est poussée jusqu'à l'épuisement de l'hexafluorure d'uranium libre, on recueille seulement du $U_2F_9$ comme composé solide, provenant de la dismutation de $UF_5$ en phase gazeuse, l'$UF_6$ libéré étant dissocié par le rayonnement U.V.

Dans un deuxième essai on réalise la réaction photochimique à chaud pour produire du $SF_6$ en continu comme dans l'exemple 6, mais en utilisant un mélange gazeux de $SF_4$ et de $UF_6$ comportant un excès de $SF_4$ et une pression limitée de $UF_6$, ce qui permet en particulier de réduire l'hexafluorure d'uranium jusqu'à la forme $U_2F_9$, dont on sait que la cinétique de la réaction est accélérée sous faible pression du $UF_6$ et aux température élevées.

Lorsque l'on opère avec le réacteur de l'exemple 3, chauffé à 240°C et avec une lampe xénon-mercure de 100 mW de puissance, le mélange $SF_4$-$UF_6$ étant introduit dans le rapport molair 2/1 et la pression de $UF_6$ étant de 200 Pa, le débit de $UF_6$ de 100 mW/h, à l'issue de la réaction photochimique la phase solide est constituée de $U_2F_9$ exempt d'impuretés, et la phase gazeuse formée de $SF_6$, à l'exception de $S_2F_{10}$, ainsi que des réactifs qui n'ont pas réagi.

Dans un troisième essai on opère dans les mêmes conditions que précédemment, mais le réacteur est chauffé à 400°C, ce qui permet d'obtenir une phase solide formée de cristaux de $U_2F_9$ et $UF_4$. Si les temps de transit des photo-particules dans le réacteur est plus important on obtient le seul cmposé $UF_4$ stoechiométrique, très pur. Il n'y a pas de pollution par le soufre ou l'oxygène dans le fluorure d'uranium ainsi obtenu. La phase gazeuse sortant du réacteur est formée essentiellement de $SF_6$ à l'exclusion de $S_2F_{10}$.

EXEMPLE 9

Dans cet exemple, on utilise l'installation de la figure 2 avec un réacteur photochimique ayant un diamètre de 0,7 cm et une longueur de 50 cm et une source de rayonnements ultraviolets constituée par un laser à KrF pulsé qui délivre des impulsions de 350 mJ à 249 nm. On focalise le faisceau au centre du réacteur avec une lentille de $CaF_2$ de 1 m de distance focale afin que la totalité du mélange gazeux mis en circulation dans le réacteur soit irradiée. La fréquence des impulsions est de 100 Hz.

On introduit le mélange gazeux de $SF_4$ et de $UF_6$ en proportion 10/1 sous 100 Pa de pression dans le réacteur photochimique 1.

Les produits sortant du réacteur sont formés essentiellement de $S_2F_{10}$ et l'uranium se trouve majoritairement réduit à la valence 4 sous forme de $UF_4$. Ce tétrafluorure provient soit de la photodissociation directe de $UF_6$ avec départ simultané de deux atomes de fluor, soit de la dissociation de $UF_5$ monomère gazeux ou de petits polymères $(UF_5)_n$. Le tétrafluorure d'uranium monomère gazeux peut polymériser sous une forme stable et être recueilli à l'état solide au fond du volume 19.

Ainsi, le choix d'un rapport $pSF_4/pUF_6 > 1$ permet d'orienter le réaction vers la production de $S_2F_{10}$.

EXEMPLE 10

Dans cet exemple, on utilise la même installation que dans l'exemple 9, mais on soumet les réactifs circulant dans le réacteur 1 à une irradiation au moyen d'un premier rayonnement ultraviolet à une longueur d'onde de 266 nm pour dissocier $UF_6$ et former de l'$UF_5$ gazeux fortement excité et d'un second rayonnement à une longueur d'onde de 532 nm pour dissocier $UF_5$ gazeux avant collision. Ces rayonnements sont obtenus par la deuxième et la quatrième harmoniques du rayonnement à 1,06 $\mu$m fourni par un laser YAG:$Nd^{3+}$ pulsé dont la durée d'impulsion est de 30 ns. L'énergie du rayonnement ultraviolet est de 3 mJ, celle de la lumière verte de 80 mJ et la fréquence de répétition des tirs de 10 Hz. Le $SF_4$ et le $UF_6$ sont en écoulement lent dans le réacteur 1 sous une pression totale de 50 Pa. Dans ces conditions, on recueille surtout du $S_2F_{10}$ et le produit solide se trouve sous la forme de $UF_4$ et de $UF_5$ qui est majoritaire.

EXEMPLE 11

Dans cet exemple, on utilise l'installation de la figure 2 avec une lampe à halogène de 1000 W qui a un spectre continu dans le visible et émet faiblement dans l'ultraviolet proche. On focalise le faisceau avec une lentille de 5 cm de distance fovale au centre d'un réacteur photochimique ayant un trajet optique de 2 cm. Le mélange gazeux $SF_4$ et $UF_6$ dans le rapport 10/1 circule lentement dans le réacteur sous une pression de 100 Pa.

Dans ces conditions, les gaz sortant du filtre 27 sont essentiellement constitués de $S_2F_{10}$ et le produit solide recueilli à la base du volume 19 est du $UF_5$ avec des traces de $UF_4$.

Les exemples 9 à 11 montrent ainsi la difficulté que l'on rencontre à réduire photochimiquement l'$UF_6$ à la valence 4, tant la liaison $F_5U\text{-}F$ est relativement faible (70 Kcal) comparée aux énergies moyennes de liaison de $UF_6$ (125 Kcal) et de $UF_4$ (145 Kcal). Cette stabilité chimique relativement faible de l'$UF_6$ explique son action de fort agent fluorant conduisant par exemple à :

$$UF_{4(g)} + UF_6 \rightarrow 2UF_5$$

Ces derniers exemples en milieu non collisionnel montrent qu'en opérant avec les très fortes fluences fournies par les lasers pulsés, des phénomènes à plusieurs photons permettent de réduire l'$UF_6$ sous la forme d'$UF_4$, et qu'avec les sources continues large bande, les photons non utilisable pour la dissociation directe de l'$UF_6$ peuvent être absorbés par l'$UF_5$ gazeux et provoquer sa dissociation. Cependant, ces opérations sont limitées aux très faibles pressions et ne donnent que des effets partiels. Dans le cas des lampes U.V., la lumière ne sera pas filtrée à la partie U.V. intéressante pour dissocier $UF_6$ ; le rayonnement total sera conservé, la partie IR pouvant servir à chauffer la cellule.

**Revendications**

1. Procédé de préparation de fluorures de soufre de formule $SF_6$ et $S_2F_{10}$ par réaction de tétrafluorure de soufre avec l'hexafluorure d'uranium, caractérisé en ce que l'on soumet un mélange gazeux contenant l'hexafluorure d'uranium et le tétrafluorure de soufre à une irradiation au moyen de rayonnements ultraviolets ayant une longueur d'onde de 200 à 400 nm, et en ce que l'on sépare du mélange réactionnel les décafluorure et hexafluorure de soufre formés.

2. Procédé selon la revendication 1, caractérisé en ce que le tétrafluorure de soufre contient du sousfluorure de soufre $S_2F_2$.

3. Procédé selon l'une quelconque des revendications 1 et 2, caractérisé en ce que le rayonnement ultraviolet a une longueur d'onde de 200 à 340 nm.

4. Procédé selon l'une quelconque des revendications 1 à 3 orienté vers la préparation d'hexafluorure de soufre $SF_6$, caractérisé en ce que la longueur d'onde de la source de rayonnements étant de 266 nm, le rapport de la pression partielle du tétrafluorure de soufre à la pression partielle de l'hexafluorure d'uranium est au plus égal à 1,5 $\varphi(\lambda)$ avec $\varphi(\lambda)$ représentant le flux énergétique surfacique de la source de rayonnements ultra-violets exprimé en watt par $cm^2$.

5. Procédé selon l'une quelconque des revendications 1 à 3 orienté vers la préparation du décafluorure de soufre $S_2F_{10}$, caractérisé en ce que la longueur d'onde de la source de rayonnements étant de 266 nm, le rapport de la pression partielle du tétrafluorure de soufre à la pression partielle de $UF_6$ est au moins égal à 1,5 $\varphi(\lambda)$ avec $\varphi(\lambda)$ représentant le flux énergétique surfacique de la source de rayonnements ultra-violets exprimé en watt par $cm^2$.

6. Procédé selon l'une quelconque des revendications 1 à 5, caractérisé en ce que la pression partielle de $UF_6$ est de 100 à 10 000 Pa.

7. Procédé selon l'une quelconque des revendications 1 à 6, caractérisé en ce que les rayonnements ultraviolets sont produits par un laser pulsé émettant à une longueur d'onde de 266 nm.

8. Procédé selon l'une quelconque des revendications 1 à 6, caractérisé en ce que les rayonnements ultraviolets sont produits par un laser pulsé émettant à une longueur d'onde de 249 nm.

9. Procédé selon l'une quelconque des revendications 1 à 8, caractérisé en ce que l'on met en circulation dans une enceinte étanche un mélange gazeux comprenant du tétrafluorure de soufre et de l'hexafluorure d'uranium, en ce que l'on soumet le mélange circulant dans l'enceinte à une irradiation au moyen des rayonnements ultraviolets et en ce que l'on sépare du mélange gazeux sortant de l'enceinte les produits solides formés.

10. Procédé selon l'une quelconque des revendications 1 à 9, caractérisé en ce que la réaction a lieu à température ambiante.

11. Procédé selon l'une quelconque des revendications 1 à 10, caractérisé en ce que le produit solide est le pentafluorure d'uranium $UF_5$ exempt d'impuretés.

12. Procédé selon la revendication 9 de préparation d'hexafluorure de soufre, caractérisé en ce que l'on soumet le mélange gazeux ainsi séparé à un traitement thermique effectué à une température de 150 à 300°C pendant une durée suffisante pour obtenir la dismutation de $S_2F_{10}$ en $SF_4$ et $SF_6$.

13. Procédé selon la revendication 9 de préparation d'hexafluorure de soufre, caractérisé en ce que l'on chauffe l'enceinte à une température de 130 à 400°C.

14. Procédé selon la revendication 13, caractérisé en ce que la température est inférieure à 170°C et que le produit solide est du $UF_5$ cristallisé pur.

15. Procédé selon la revendication 13, caractérisé en ce que la température du réacteur est comprise entre 170 et 260°C, que la pression de $UF_6$ est inférieure à 1000 Pa, que le débit gazeux est assez lent pour permettre l'entière dismutation du $S_2F_{10}$ en $SF_6$ et $SF_4$ ainsi que la dismutation du $UF_5$ formé, et que le produit solide est $U_2F_9$ pur.

16. Procédé selon la revendication 13, caractérisé en ce que la température du réacteur est comprise entre 300°C et 400°C, que la pression de $UF_6$ est inférieure à 1000 Pa, que la densité de $UF_6$ excité électroniquement est inférieure à $10^{14}$ cm$^{-3}$, et que le produit solide est $UF_4$ pur.

17. Procédé selon la revendication 9 de préparation d'hexafluorure de soufre, caractérisé en ce que l'on soumet de plus le mélange gazeux circulant dans l'enceinte à une irradiation au moyen de rayonnements infrarouges ayant une longueur d'onde de 10,5 à 11 μm.

18. Procédé selon l'une quelconque des revendications 1 à 5, caractérisé en ce que la réaction a lieu dans une détente supersonique en présence d'une ou plusieurs excitations vibrationnelles de $UF_6$ à 16 μm qui ne sont pas à elles seules dissociatrices de $UF_6$.

19. Procédé selon la revendication 3 orienté vers la préparation du décafluorure de soufre $S_2F_{10}$, caractérisé en ce que la pression partielle de $UF_6$ est inférieure à 100 Pa, et les rayonnements utilisés sont constitués par un premier rayonnement ayant une longueur d'onde de 200 à 340 nm et un second rayonnement ayant une longueur d'onde de 200 à 500 nm, et en ce que l'on prépare un composé solide d'uranium de formule $UF_4$.

20. Procédé selon l'une quelconque des revendications 1 à 9, caractérisé en ce que l'on soumet au préalable à un traitement de purification le tétrafluorure de soufre à introduire dans le mélange gazeux afin d'éliminer les impuretés comme le fluorure de thionyle ou les sous fluorures de soufre, ou de convertir les sous fluorures de soufre qu'il contient en $SF_4$.

21. Procédé selon l'une quelconque des revendications 9 à 20, caractérisé en ce que l'enceinte comprend une fenêtre transparente aux rayonnements ultraviolets et en ce que l'on fait circuler dans l'enceinte un gaz le long de cette fenêtre.

22. Procédé selon la revendication 21, caractérisé en ce que le gaz de balayage de la fenêtre comprend au moins un des gaz suivants: azote, argon, hélium, $SF_4$.

## Claims

1. Process for the preparation of sulphur fluorides of formula $SF_6$ and $S_2F_{10}$ by reaction of sulphur tetrafluoride with uranium hexafluoride, characterized in that a gaseous mixture containing uranium hexafluoride and sulphur tetrafluoride is subjected to irradiation by means of ultraviolet radiations which have a wavelength of 200 to 400 nm, and in that the sulphur decafluoride and hexafluoride which are formed are separated from the reaction mixture.

2. Process according to Claim 1, characterized in that the sulphur tetrafluoride contains sulphur subfluoride $S_2F_2$.

3. Process according to either of Claims 1 and 2, characterized in that the ultraviolet radiation has a wavelength of 200 to 340 nm.

4. Process according to any one of Claims 1 to 3, directed towards the preparation of sulphur hexafluoride $SF_6$, characterized in that the wavelength of the source of radiations being 266 nm, the ratio of the partial pressure of sulphur tetrafluoride to the partial pressure of uranium hexafluoride does not exceed

1.5 φ (λ) with φ (λ) denoting the surface energy flux of the source of ultraviolet radiations, expressed in watts per cm².

5. Process according to any one of Claims 1 to 3, directed towards the preparation of sulphur decafluoride $S_2F_{10}$, characterized in that, the wavelength of the source of radiations being 266 nm, the ratio of the partial pressure of sulphur tetrafluoride to the partial pressure of $UF_6$ is at least 1.5 φ (λ) with φ (λ) denoting the surface energy flux of the source of ultraviolet radiations, expressed in watts per cm².

6. Process according to any one of Claims 1 to 5, characterized in that the partial pressure of $UF_6$ is from 100 to 10,000 Pa.

7. Process according to any one of Claims 1 to 6, characterized in that the ultraviolet radiations are produced by a pulsed laser emitting at a wavelength of 266 nm.

8. Process according to any one of Claims 1 to 6, characterized in that the ultraviolet radiations are produced by a pulsed laser emitting at a wavelength of 249 nm.

9. Process according to any one of Claims 1 to 8, characterized in that a gaseous mixture comprising sulphur tetrafluoride and uranium hexafluoride is circulated in a leakproof enclosure, in that the mixture circulating in the enclosure is subjected to irradiation by means of ultraviolet radiations and in that the solid products formed are separated from the gaseous mixture leaving the enclosure.

10. Process according to any one of Claims 1 to 9, characterized in that the reaction takes place at ambient temperature.

11. Process according to any one of Claims 1 to 10, characterized in that the solid product is uranium pentafluoride $UF_5$ free from impurities.

12. Process according to Claim 9 for the preparation of sulphur hexafluoride, characterized in that the gaseous mixture thus separated is subjected to a heat treatment carried out at a temperature of 150 to 300°C for a sufficient period of time to obtain the disproportionation of $S_2F_{10}$ into $SF_4$ and $SF_6$.

13. Process according to Claim 9 for the preparation of sulphur hexafluoride, characterized in that the enclosure is heated to a temperature of 130 to 400°C.

14. Process according to Claim 13, characterized in that the temperature is lower than 170°C and that the solid product is pure crystalline $UF_5$.

15. Process according to Claim 13, characterized in that the temperature of the reactor is between 170 and 260°C, that the pressure of $UF_6$ is lower than 1000 Pa, that the gas flow rate is slow enough to permit the complete disproportionation of $S_2F_{10}$ into $SF_6$ and $SF_4$ and the disproportionation of the $UF_5$ formed, and in that the solid product is pure $U_2F_9$.

16. Process according to Claim 13, characterized in that the temperature of the reactor is between 300°C and 400°C, that the pressure of $UF_6$ is lower than 1000 Pa, that the density of electronically excited $UF_6$ is lower than $10^{14}$ cm$^{-3}$, and that the solid product is pure $UF_4$.

17. Process according to Claim 9 for the preparation of sulphur hexafluoride, characterized in that the gaseous mixture circulating in the enclosure is additionally subjected to irradiation by means of infrared radiations which have a wavelength of 10.5 to 11 μm.

18. Process according to any one of Claims 1 to 5, characterized in that the reaction takes place in a supersonic expansion in the presence of one or more vibrational excitations of $UF_6$ at 16 μm which by themselves are not dissociative for $UF_6$.

19. Process according to Claim 3, directed towards the preparation of sulphur decafluoride $S_2F_{10}$, characterized in that the partial pressure of $UF_6$ is lower than 100 Pa, and the radiations employed consist of a first radiation which has a wavelength of 200 to 340 nm and a second radiation which has a wavelength of 200 to 500 nm and in that a solid uranium compound of formula $UF_4$ is prepared.

20. Process according to any one of Claims 1 to 9, characterized in that the sulphur tetrafluoride to be introduced into the gaseous mixture is subjected beforehand to a purification treatment in order to remove the impurities such as thionyl fluoride or sulphur subfluorides, or to convert the sulphur subfluorides which it contains into $SF_4$.

21. Process according to any one of Claims 9 to 20, characterized in that the enclosure comprises a window transparent to ultraviolet radiations and in that a gas is circulated in the enclosure along this window.

22. Process according to Claim 21, characterized in that the gas for sweeping the window comprises at least one of the following gases: nitrogen, argon, helium, $SF_4$.

## Patentansprüche

1. Verfahren zur Herstellung von Schwefelfluoriden der Formel $SF_6$ und $S_2F_{10}$ durch Umsetzung von Schwefeltetrafluorid mit Uranhexafluorid, dadurch gekennzeichnet, daß man eine Gasmischung, die Uranhexafluorid und Schwefeltetrafluorid enthält, mit UV-Strahlen mit einer Wellenlänge von 200 bis 400 nm bestrahlt und daß man das gebildete Decafluorid und Hexafluorid von Schwefel aus der Reaktionsmischung abtrennt.

2. Verfahren nach Anspruch 1, dadurch gekennzeichnet, daß das Schwefeltetrafluorid Schwefelunterfluorid $S_2F_2$ enthält.

3. Verfahren nach einem der Ansprüche 1 und 2, dadurch gekennzeichnet, daß die UV-Strahlung eine Wellenlänge von 200 bis 340 nm hat.

4. Verfahren nach einem der Ansprüche 1 bis 3 zur Herstellung von Schwefelhexafluorid $SF_6$, dadurch gekennzeichnet, daß die Wellenlänge der Strahlungsquelle 266 nm beträgt, daß das Verhältnis zwischen dem Partialdruck des Schwefeltetrafluorids und dem Partialdruck des Uranhexafluorids höchstens 1,5 $\varphi$ ($\lambda$) ist, wobei $\varphi$ ($\lambda$) den Oberflächen-Energiefluß der UV-Strahlungsquelle, ausgedrückt in Watt/$cm^2$, darstellt.

5. Verfahren nach einem der Ansprüche 1 bis 3 zur Herstellung von Schwefeldecafluorid $S_2F_{10}$, dadurch gekennzeichnet, daß die Wellenlänge der Strahlungsquelle 266 nm beträgt, daß das Verhältnis zwischen dem Partialdruck des Schwefeltetrafluorids und dem Partialdruck des $UF_6$ mindestens 1,5 $\varphi$ ($\lambda$) ist, wobei $\varphi$ ($\lambda$) den Oberflächenenergiefluß der UV-Strahlungsquelle, ausgedrückt in Watt/$cm^2$, darstellt.

6. Verfahren nach einem der Ansprüche 1 bis 5, dadurch gekennzeichnet, daß der Partialdruck von $UF_6$ 100 bis 10 000 Pa beträgt.

7. Verfahren nach einem der Ansprüche 1 bis 6, dadurch gekennzeichnet, daß die UV-Strahlen von einem pulsierenden Laser, der Strahlung mit einer Wellenlänge von 266 nm emittiert, erzeugt werden.

8. Verfahren nach einem der Ansprüche 1 bis 6, dadurch gekennzeichnet, daß die UV-Strahlen von einem pulsierenden Laser, der Strahlung mit einer Wellenlänge von 249 nm emittiert, erzeugt werden.

9. Verfahren nach einem der Ansprüche 1 bis 8, dadurch gekennzeichnet, daß man in einem dichten Behälter eine Gasmischung, die Schwefeltetrafluorid und Uranhexafluorid enthält, zirkulieren läßt, daß man die in dem Behälter zirkulierende Mischung mit UV-Strahlung bestrahlt und daß man aus dem den Behälter verlassenden Gasgemisch die gebildeten festen Produkte abtrennt.

10. Verfahren nach einem der Ansprüche 1 bis 9, dadurch gekennzeichnet, daß die Reaktion bei Umgebungstemperatur abläuft.

11. Verfahren nach einem der Ansprüche 1 bis 10, dadurch gekennzeichnet, daß es sich bei dem festen Produkt um Uranpentafluorid $UF_5$ handelt, das frei von Verunreinigungen ist.

12. Verfahren nach Anspruch 9 zur Herstellung von Schwefelhexafluorid, dadurch gekennzeichnet, daß man das auf diese Weise abgetrennte Gasgemisch einer thermischen Behandlung unterwirft, die bei einer Temperatur von 150 bis 300°C für eine Zeitspanne durchgeführt wird, die ausreicht, um die Dismutation von $S_2F_{10}$ zu $SF_4$ und $SF_6$ zu erzielen.

13. Verfahren nach Anspruch 9 zur Herstellung von Schwefelhexafluorid, dadurch gekennzeichnet, daß man den Behälter auf eine Temperatur von 130 bis 400°C erwärmt.

14. Verfahren nach Anspruch 13, dadurch gekennzeichnet, daß die Temperatur unterhalb 170°C liegt und daß das feste Produkt reines kristallisiertes $UF_5$ ist.

15. Verfahren nach Anspruch 13, dadurch gekennzeichnet, daß die Temperatur des Reaktors zwischen 170 und 260°C liegt, daß der Druck des $UF_6$ unterhalb 1000 Pa liegt, daß der Gasdurchfluß ausreichend langsam ist, um eine vollständige Dismutation des $S_2F_{10}$ zu $SF_6$ und $SF_4$ sowie die Dismutation des gebildeten $UF_5$ zu erlauben, und daß das feste Produkt reines $U_2F_9$ ist.

16. Verfahren nach Anspruch 13, dadurch gekennzeichnet, daß die Temperatur des Reaktors zwischen 300 und 400°C liegt, daß der Druck des $UF_6$ unterhalb 1000 Pa liegt, daß die Dichte des elektronisch angeregten $UF_6$ unterhalb $10^{14}$ $cm^{-3}$ liegt und daß das feste Produkt reines $UF_4$ ist.

17. Verfahren nach Anspruch 9 zur Herstellung von Schwefelhexafluorid, dadurch gekennzeichnet, daß man das in dem Behälter zirkulierende Gasgemisch darüber hinaus mit IR-Strahlung mit einer Wellenlänge von 10,5 bis 11 $\mu$m bestrahlt.

18. Verfahren nach einem der Ansprüche 1 bis 5, dadurch gekennzeichnet, daß die Reaktion in einer Ultraschall-Entspannung in Gegenwart einer oder mehrerer Schwingungsanregungen von $UF_6$ bei 16 $\mu$m stattfindet, die allein auf das $UF_6$ nicht dissoziierend wirken.

19. Verfahren nach Anspruch 3 zur Herstellung des Schwefeldecafluorids $S_2F_{10}$, dadurch gekennzeichnet, daß der Partialdruck von $UF_6$ unter 100 Pa liegt und daß die verwendeten Strahlen bestehen aus einer ersten Strahlung mit einer Wellenlänge von 200 bis 340 nm und einer zweiten Strahlung mit einer Wellenlänge von 200 bis 500 nm und daß man eine feste Uranverbindung der Formel $UF_4$ herstellt.

20. Verfahren nach einem der Ansprüche 1 bis 9, dadurch gekennzeichnet, daß man das Schwefeltetrafluorid vor der Einführung in die Gasmischung einer Reinigungsbehandlung unterzieht, um die Verunreinigungen, wie das Thionylfluorid und die Schwefelunterfluoride, zu eliminieren oder die Schwefelunterfluoride, die es enthält, in $SF_4$ umzuwandeln.

21. Verfahren nach einem der Ansprüche 9 bis 20, dadurch gekennzeichnet, daß der Behälter ein für UV-Strahlen durchlässiges Fenster aufweist und daß man in dem Behälter entlang dieses Fensters ein Gas zirkulieren läßt.

22. Verfahren nach Anspruch 21, dadurch gekennzeichnet, daß das Gas zur Reinigung des Fensters mindestens eines der folgenden Gase umfaßt: Stickstoff, Argon, Helium, $SF_4$.

FIG. 1

FIG. 2

EP 0 216 664 B1

FIG. 3

EP 0 216 664 B1